# EUROPEAN PATENT APPLICATION

(11) **EP 4 316 712 A1**
(43) Date of publication of application: **07.02.2024**
(21) Application number: 23188792.8
(22) Date of filing: 31.07.2023
(51) Int. Cl.: B23D 61/12, B23D 61/14, B23D 65/00

(54) **RECIPROCATING SAW BLADE**

(30) Priority: 05.08.2022 US 202263395505 P; 28.07.2023 US 202318360880
(71) Applicant: Black & Decker, Inc., New Britain, CT 06053 (US)
(72) Inventor: SHARIFI, Ashkan, Wilbraham, 01095 (US); COLETTA, Jarrod A., Albany, 12211 (US); ELLISTON, Asif A., East Longmeadow, 01028 (US); SEBARADAR, Mehdi, Anaheim Hills, 92808 (US); HALL, Kenneth, East Longmeadow, 01028 (US)
(74) Representative: SBD IPAdmin

(57) **Abstract**

A reciprocating saw blade (100) is provided including a blade cutting edge (108) including a plurality of teeth (122) and a plurality of gullets (124). At least a portion of the plurality of teeth (122) each includes a rake face (450), a relief face (460), a tooth cutting edge (A), and at least one non-cutting tooth edge (B) extending on a first side face (470) transverse to the rake face (450) and the relief face (460), and a second side face (475) opposite the first side face (470) and transverse to the rake face (450) and the relief face (460), a first relief-side edge (C) at a junction between the first side face (470) and the relief face (460), and a second relief-side edge (C) at a junction between the second side face (475) and the relief face (460). At least one of the first and second relief-side edges (C) includes a modified portion (790) extending rearward from the rake face (450).

## Description

### CLAIM OF PRIORTY

The present application claims the benefit of and priority to United States Provisional Patent Application No. 63/395,505, filed on August 5, 2022, entitled RECIPROCATING SAW BLADE, the content of which is hereby incorporated herein by reference as if set forth in its entirety.

### FIELD

This present inventive concept relates generally to saw blades for use with power tools that reciprocate the blade such as reciprocating saws and jig saws, in particular, to reciprocating and jig saw blades having hard metal teeth.

### BACKGROUND

Reciprocating saw blades for power tools facilitate cutting a wide variety of materials, can be set-up and used quickly, and facilitate access in tight locations. For example, various types of reciprocating saw blades can be used to cut wood, metal, plastic, rubber, composite materials, sandwich panels, abrasive materials, and tile, among other things. There are various types of blades that can be used with powered reciprocating saws. The blades may be selected based on, for example, the material that is being cut.

For example, reciprocating saw blades for use in cutting metal may include a saw blade including hard metal, for example, carbide or cermet, teeth, which are welded to tooth holders on the body of the saw blade. A cutting edge of the carbide or cermet teeth is generally made as sharp as possible to increase cutting speed and efficiency. However, the hard metal material used for the teeth, the cutting edges of the teeth tend to chip and significantly reduce the blade life and cutting efficiency.

### SUMMARY

Some embodiments of the present inventive concept provide a reciprocating saw blade. The reciprocating saw blade includes an elongated blade body extending along a blade axis and having a rear end portion, a front end portion, a first lateral face, a second lateral face opposite the first lateral face, and a blade cutting edge extending between the rear end portion and the front end portion, the blade cutting edge including a plurality of teeth and a plurality of gullets; and a tang coupled to the rear end portion and configured to be received in a blade holder of a powered reciprocating saw. At least a portion of the plurality of teeth each includes a rake face, a relief face, a tooth cutting edge at a junction between the rake face and the relief face, at least one non-cutting edge extending on a first side face transverse to the rake face and the relief face, a second side face opposite the first side face and transverse to the rake face and the relief face, a first relief-side edge at a junction between the first side face and the relief face, a second relief-side edge at a junction between the second side face and the relief face, a first modified portion on at least one of the first and second relief-side edges, the first modified portion being at least one of rounded or tapered and extending rearward from the rake face.

In further embodiments, the first modified portion may be tapered and wider adjacent the tooth cutting edge and tapers inward to be narrower as the modified portion extends rearward from the rake face and the cutting edge.

In still further embodiments, the first modified portion may be rounded and extend from about 10 to about 25 percent of the at least one of the first and second relief-side edges. The first modified portion extends rearward from the rake face and the cutting edge.

In some embodiments, the first modified portion of the at least one of the first and second relief-side edges may include two or more radii.

In further embodiments of the present inventive concept, the first modified portion of the at least one of the first and second relief-side edges may be convex.

In still further embodiments of the present inventive concept, at least one corner of the cutting edge at an intersection of the cutting edge and the first or second relief-side edge may include a second modified portion that is at least one or tapered or rounded or tapered.

In some embodiments of the present inventive concept, the reciprocating saw blade may further include a second modified portion of a first rake-side edge at a junction between the first side face and the rake face, and a third modified portion of a second rake-side edge at a junction between the second side face and the rake face. At least one of the second and third modified portions is at least one of tapered or rounded.

In further embodiments of the present inventive concept, at least one of the second modified portion and the third modified portion may be rounded and includes two or more radii.

In still further embodiments, the reciprocating saw blade may further include a fourth modified portion on at least one corner of the cutting edge at an intersection of the first rake-side edge and the first relief side-edge or an intersection of the second-rake-side edge and second relief side-edge. The fourth modified portion may be at least one of tapered or rounded.

In some embodiments, each of the plurality of cutting teeth may include a hard metal insert received by a tooth holder coupled to the elongated body of the reciprocating saw blade. The hard metal insert includes one of carbide and cement.

Further embodiments of the present inventive concept provide methods of fabricating a saw tooth for a reciprocating saw blade. The methods include providing the saw tooth having a rake face, a relief face, a tooth cutting edge at a junction between the rake face and the relief face, at least one non-cutting edge extending on a first side face transverse to the rake face and the relief face, and a second side face opposite the first side face and transverse to the rake face and the relief face, a first relief-side edge at a junction between the first side face and the relief face, and a second relief-side edge at a junction between the second side face and the relief face; and removing a portion of at least one of the first and second relief-side edges to provide a first modified portion extending rearward from the rake face.

In some embodiments, the methods include removing a portion of at least one of the first and second relief-side edges to provide the first modified portion comprises removing a portions of the first and second relief-side edges such that the first modified portion is tapered and is largest adjacent the tooth cutting edge and tapers as the tapered portion extends rearward from the rake face and the cutting edge.

In some embodiments, the methods include removing a portion of at least one of the first and second relief-side edges the first modified portion comprises providing the first modified portion that is rounded and the rounded first modified portion is from about 10 to about 25 percent of the at least one of the first and second relief-side edges and that extends rearward from the rake face and the cutting edge.

In some embodiments, the first modified portion of the at least one of the first and second relief-side edges comprise two or more radii.

In some embodiments, the first modified portion of the at least one of the first and second relief-side edges is convex.

In some embodiments, the methods further comprise rounding or tapering at least one corner of the cutting edge at an intersection of the cutting edge and the first or second relief-side edge to provide a second modified portion, the second modified portion corresponding to first modified portion.

In some embodiments, the methods further comprise modifying at least one of a first rake-side edge at a junction between the first side face and the rake face to provide a second modified portion, and a second rake-side edge at a junction between the second side face and the rake face to provide a third modified portion.

In some embodiments, the methods further comprise providing a fourth modified portion on at least one corner of the cutting edge at an intersection of the first rake-side edge and the first relief side-edge or an intersection of the second-rake-side edge and second relief side-edge, the fourth modified portion being at least one of tapered or rounded.

In some embodiments, the methods further comprise removing a portion of at least one of the first and second relief-side edges to provide the first modified portion comprises one or more of griding, honing, casting or molding of the at least one of the first and second relief side-edges.

Advantages may include one or more of the following. The reciprocating saw blades discussed herein provide hard metal teeth having a reduction in premature failure. Furthermore, the modified tooth non-cutting edges reinforce the teeth and provide the ability to increase clearance angles, allowing more efficient cuts and improved performance overall. These and other advantages and features will be apparent from the description and the drawings.

### BRIEF DESCRIPTION OF THE DRAWINGS

Fig. 1 is a side view of a reciprocating saw blade in accordance with some embodiments of the present inventive concept.
Fig. 2 is a side view of a powered reciprocating saw having a modified reciprocating saw blade positioned therein in accordance with some embodiments of the present inventive concept.
Fig. 3 is a close-up view of the modified reciprocating saw blade positioned in the powered reciprocating saw in accordance with some embodiments of the present inventive concept.
Fig. 4 is a close-up side perspective view of multiple cutting teeth of a reciprocating saw blade before modification.
Fig. 5 is a side view of a plurality of cutting teeth of a reciprocating saw blade illustrating cutting direction associated therewith.
Figs. 6A and 6B are pictures of blades having an unmodified tooth cutting edge and the failure thereof.
Figs. 7A and 7B are diagrams illustrating a tapered modification of a tooth non-cutting edge (relief-side edge) of a saw tooth in accordance with some embodiments of the present inventive concept.
Figs. 8A and 8B are diagrams illustrating a rounded/radiused modification of a tooth non-cutting edge (relief-side edge) of a saw tooth in accordance with some embodiments of the present inventive concept.
Figs. 9A and 9B are diagrams illustrating a modified tooth non-cutting edge and a rounded corner of a tooth cutting edge in accordance with some embodiments of the present inventive concept.
Figs. 10A and 10B are diagrams illustrating a modification of two non-cutting edges of a saw tooth in accordance with some embodiments of the present inventive concept.
Fig. 11 is a diagram illustrating a modification involving removing a corner where two non-cutting edges of a tooth and a cutting edge of a tooth meet in accordance with some embodiments of the present inventive concept.
Figs. 12A through 12D are diagrams illustrating a non-cutting edge of a saw tooth having a variable number of radii in accordance with some embodiments of the present inventive concept.
Fig. 13 is a diagram illustrating a reciprocating saw blade including alternating modified and unmodified teeth in accordance with some embodiments of the present inventive concept.
Fig. 14 is a diagram illustrating a scoring system for use during testing of blades including teeth having modified tooth non-cutting edges in accordance with some embodiments of the present inventive concept.
Figs. 15A and 15B are graphs illustrating test results of performance testing of blades having modified teeth in accordance with some embodiments of the present inventive concept.
Figs. 16A and 16B are pictures of modified teeth on blades after five cuts in steel in accordance with some embodiments of the present inventive concept.
Fig. 17 is a graph illustrating blade life performance of modified blades in accordance with some embodiments of the present inventive concept.
Fig. 18 is a graph illustrating cutting speed performance of modified blades in accordance with some embodiments of the present inventive concept.
Fig. 19 is a graph blade life performance of modified blades compared to standard blades in accordance with some embodiments of the present inventive concept.
Fig. 20 is a graph illustrating cutting speed performance of modified blades compared to standard blades in accordance with some embodiments of the present inventive concept.

### DETAILED DESCRIPTION

As discussed above, reciprocating saw blades for use in cutting metal may include a saw blade including a hard metal, for example, carbide teeth, welded to tooth holders on the saw blade. A cutting edge of the carbide teeth is generally made as sharp as possible to increase cutting speed and efficiency. However, due to the hard carbide material used for the teeth, the cutting edges of the teeth tend to chip and significantly reduce the blade life and cutting efficiency.

Accordingly, some embodiments of the present inventive concept provide a reciprocating saw blade including one or more saw teeth made of a hard metal having at least one non-cutting edge modified. The modification of the at least one non-cutting edge of the saw teeth decreases premature failure of the saw blade experienced by standard saw blades. Various modifications in accordance with embodiments of the present inventive concept will be discussed herein with respect to the figures.

As used herein, hard metal refers to carbide, cermet, or other like material, and hard metal blades refers to saw blades having teeth or portions of teeth composed of carbide, cermet, or other like material on the cutting edge of the blade. In some embodiments, the blade body of these blades may include alloy steel. Adding this hard metal to the cutting edge of the blade improves cutting speed, blade life and versatility over that of a carbon steel, high-speed steel, or bi-metal blade.

It will be understood that reciprocating saw blades including modified hard metal teeth as discussed herein can be used to cut any suitable material and is not limited to only cutting metal as discussed with respect to examples herein.

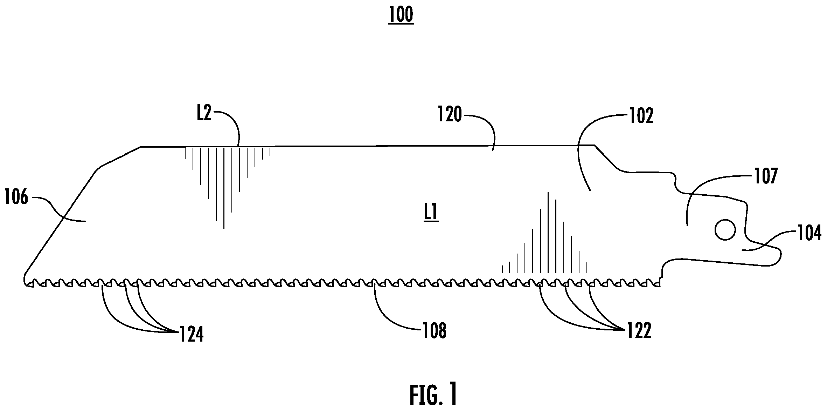

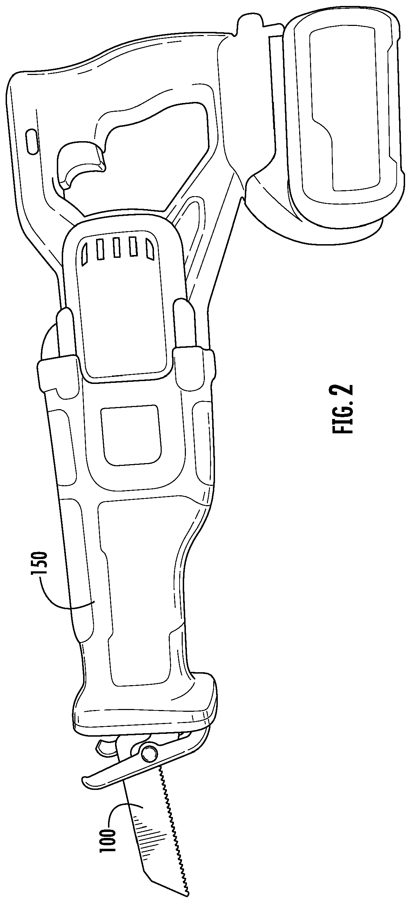

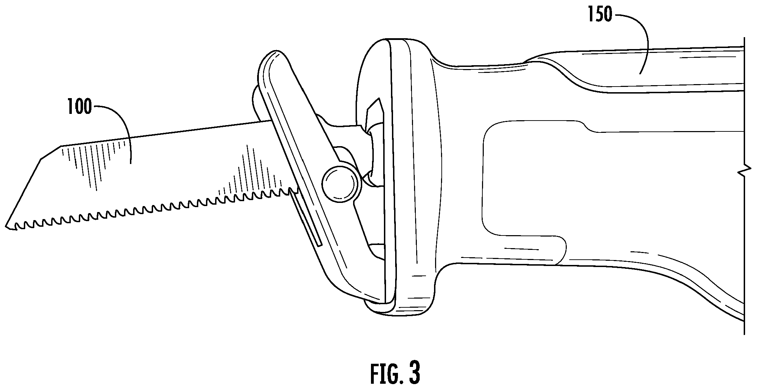

Referring first to Figs. 1 through 3, in the illustrated embodiment, a reciprocating saw blade 100 including modified saw teeth in accordance with some embodiments of the present inventive concept will be discussed. As illustrated in Fig. 1, the reciprocating saw blade 100 has an elongated body 102 and a tang 104 coupled to a rear end portion 107 of the elongated body 102. The tang 104 is receivable in a blade holder of a powered reciprocating saw 150 as shown in Figs. 2 and 3. The elongated body 102 has a first lateral face L1 and a second lateral face L2, opposite the first lateral face L1. The second lateral face L2 is not visible in the side view of the saw blade 100 illustrated in Fig. 1 as the second lateral face L2 is facing into the page. As further illustrated in Fig. 1, the elongated body 102 includes a blade cutting edge 108 including multiple cutting teeth 122, each of the cutting teeth 122 being separated by a corresponding plurality of gullets 124. As discussed above, in accordance with embodiments discussed herein, the cutting teeth 122 have one or more modified non-cutting tooth edge, the modification of these edges decreasing the likelihood of premature failure of the reciprocating saw blade. It will be understood that not all of the teeth on a blade body must be modified as discussed herein, but only some of the cutting teeth 122 may be modified.

The elongated body 102 has a back edge 120, opposite the cutting edge of the blade 108, and a front end portion 106. In some embodiments, the front end portion 106 may have an optional plunging tip. It will be understood that the reciprocating saw blade 100 of Fig. 1 is provided as an example for discussion herein and, therefore, embodiments of the present inventive concept are not limited to the configuration illustrated therein. Other shapes and configurations of the saw blade may be used including the modifies cutting teeth discussed herein without departing from the scope of the present inventive concept.

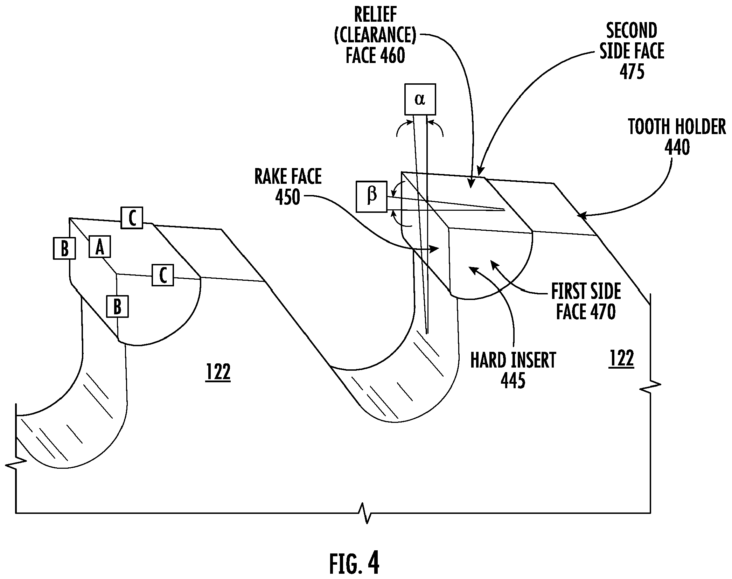

As discussed above, some embodiments of the present inventive concept provide a reciprocating saw blade 100 for use in cutting metal items such as typical non-heat treated low to medium carbon steels. Details with respect to the cutting edge of the blade 108 including the cutting teeth 122 will now be discussed with respect to Fig. 4. It will be understood that the cutting teeth illustrated in Fig. 4 are unmodified and are provided for purposes of description of terms only. As illustrated, each of the cutting teeth 122 include a tooth holder 440 and an insert 445 made of a hard metal, for example, a carbide insert/tooth, attached to the tooth holder 440. The insert 445 may be attached to the tooth holder 440 by, for example, welding or brazing the insert to the tooth holder 440. The hard metal insert 445 may be, for example, carbide or cermet in some embodiments. However, the hard metal insert 445 will be discussed herein as a carbide tooth/insert for example purposes. It will be understood that although embodiments of the present inventive concept are discussed herein with respect examples having carbide inserts, embodiments of the present inventive concept are not limited thereto.

As illustrated in Fig. 4, each hard metal tooth 445 has a rake face 450, a clearance face (relief face) 460, a first side face 470 and a second opposite side face 475, a tooth cutting edge A at a junction between the rake face 450 and the relief (clearance) face 460, first and second rake-side edges B at junctions between the rake face 450 and first 470 and second side 475 faces, and relief-side edges C at junctions between the relief face 460 and first 470 and second 475 side faces. As discussed above, non-cutting edges of the tooth, for example, rake-side edges B and relief-side edges C, are modified in accordance with embodiments discussed herein, although Fig. 4 illustrates these edges unmodified for discussion purposes. As will be discussed further below, at least one of the relief-side edges C and/or the rake-side edges B may be rounded or tapered extending reward toward to the rake face 450 to decrease the likelihood of premature failure of the saw blade.

Referring again to Fig. 4, the rake face 450 is at a rake angle α, which is generally a positive angle, relative to a vertical plane and the relief (clearance) face 460 is at a clearance angle β relative to a horizontal plane. For improved blade life and cutting efficiency, the general practice is to have higher clearance angles β. Generally, a higher clearance angle β corresponds to a more efficient blade that has a longer life. However, if the clearance angle β gets too steep, the blade may not be very robust. Most hard metal blades, for example, carbide blades, generally have clearance angles β of at most 12 degrees for metal cutting as in order to reduce chipping of the carbide teeth and premature failure of the blade. The ability to increase the clearance angle β in carbide blades is desired in order to increase efficiency.

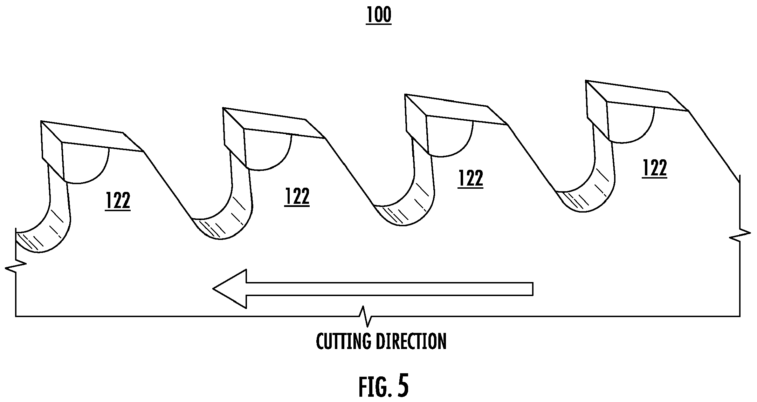

Fig. 5 is a diagram of a portion of an unmodified saw blade including a plurality of teeth 122. As shown in Fig. 5, as a blade 100 moves in the cutting direction shown, the friction and contact with the material being cut will eventually cause wear on the teeth. On the reverse stroke (non-cutting direction) of the saw, the impact forces can cause rake-side edges B and relief-side edges C (Fig. 4) to be under some tensile forces and increase the probability of inducing cracks in those edges.

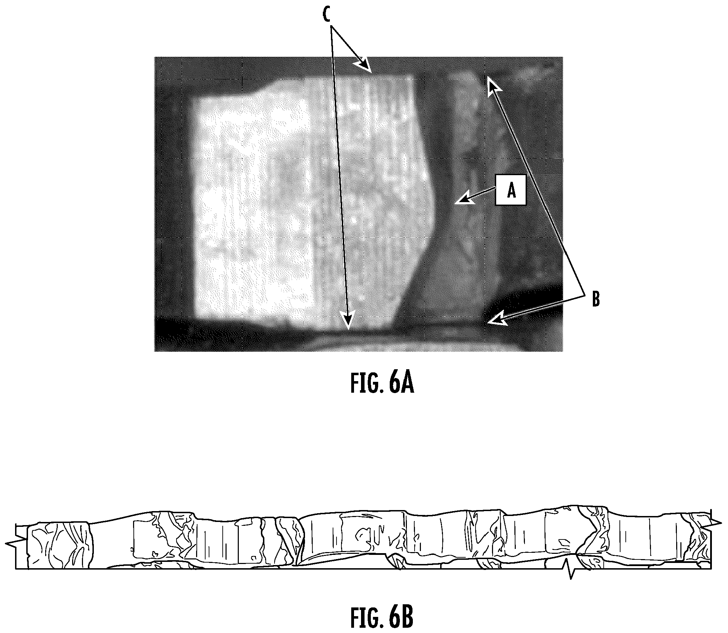

As illustrated, for example, in Fig. 6A, an unmodified tooth may fail across one or more of edges A, B and C. In typical saw blades, edge modification is performed to improve the resistance of the tooth to fracture in the cutting direction (Fig. 5). However, as discussed above, modifying the cutting edge of the tooth A alone is not enough to increase the life of the saw blades. Fig. 6B illustrates a blade having an unmodified tooth cutting edge after five cuts in a 4140 steel bar and all tooth cutting edges are broken.

Accordingly, some embodiments of the present inventive concept provide reciprocating saw blades having modified non-cutting tooth edges, i.e., rake-edges B and/or relief-edges C, instead of modifying the tooth cutting edge A or in addition to modifying the tooth cutting edge A. As will be discussed below, the modification may involve rounding or beveling some or all portions of the non-cutting tooth edges. As discussed above, the reverse stroke (non-cutting direction) of the blade causes damage to these non-cutting tooth edges. Although it is not intuitive to strengthen a blade that is running backwards, these modifications unexpectedly and substantially improve the durability and chipping of the carbide tooth cutting edges and teeth as will be discussed further herein.

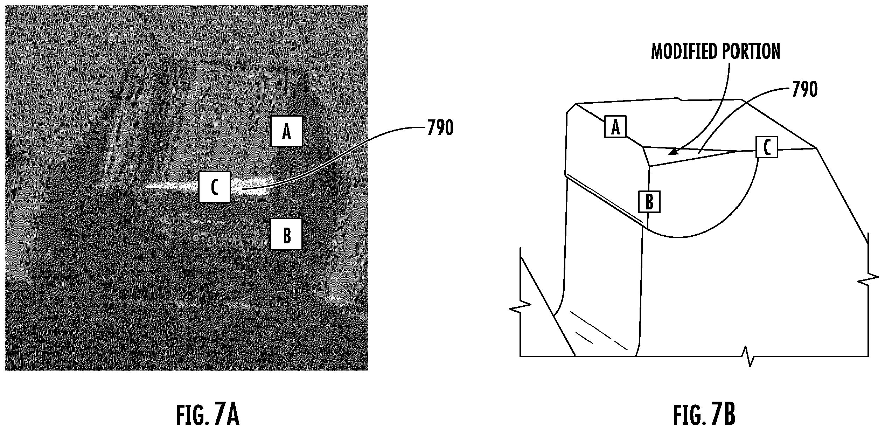

Referring to Figs. 7A and 7B, some embodiments of the present inventive concept having a modified portion 790 of one or more relief-side edges C will be discussed. As illustrated in Figs. 7A and 7B, the modified portion 790 of relief-side edges C may be provided by grinding, honing (e.g., by brushing, blasting, peening, or other methods), casting, molding, or otherwise forming by known manufacturing processes.

As illustrated in Fig. 7B, the modified portions 790 of relief-side edges C are ground to a flat, tapered triangular/wedge shaped planar surface. Although it will be understood that the surface can be a flat plane or could include a convex or concave radius without departing from the scope of the present inventive concept.

It will be understood that although both relief-side edges C are modified in Figs. 7A and 7B, in some embodiments, only one relief-side edge C may be modified, or the modified portion 790 may alternate between sides. Furthermore, although the modified portion 790 of the relief-side edges C are discussed as being ground, the modified teeth may be preformed with the modification without departing from the scope of the present inventive concept.

Furthermore, although not shown in Figs. 7A and 7B, tooth cutting edges A and/or rake-side edges B may or may not be modified in embodiments illustrated in Figs. 7A and 7B. It will be further understood when positioned on the elongated body of the blade, the teeth may be set to the left or to the right of center or bent in one direction or the other to improve the performance of the blade.

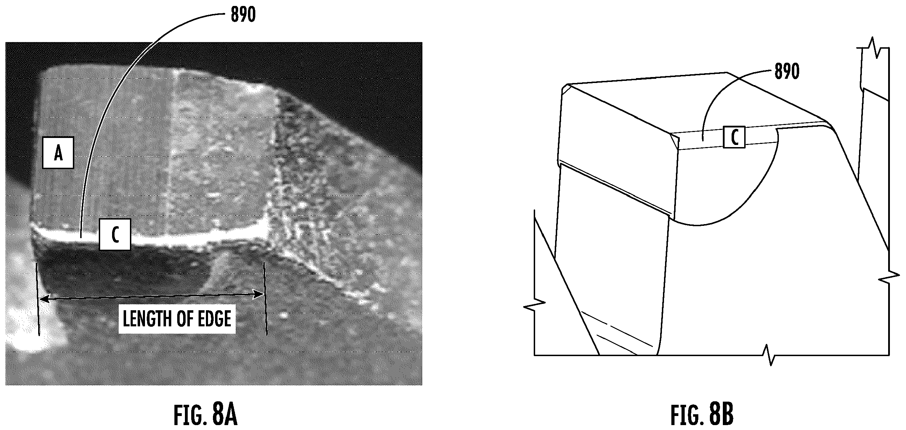

Referring now to Figs. 8A and 8B, further embodiments of the present inventive concept having a modification of one or more relief-side edges C will be discussed. As illustrated in Figs. 8A and 8B, a modified portion 890 of one or more of the relief-side edges C are rounded or radiused. The modification may be accomplished by grinding, honing, casting, molding, or other known manufacturing processes in some embodiments. The rounding results in a convex curvature of the modified portions 890 of relief-side edges C. As discussed above, it is not intuitive or typical to modify the relief-side edge C as it is not an edge that is active in the actual cutting, i.e., a non-cutting tooth edge. However, in a reciprocating saw that moves back and forth, the relief-side edge C edge is an active part of the cut and impacts the tooth. The tooth impacts the work piece in the non-cutting direction. In some embodiments, the modified portion 890 of the relief-side edge C is at least 10 percent to about 25 percent of the total length of the relief-side edge illustrated in Fig. 8A.

In embodiments illustrated in Figs. 8A and 8B, both relief-side edges C have a modified portion 890. It will be understood that the size and configuration (shape) of the modification can be different (or the same) on each edge. Furthermore, only one edge may be modified, or the modified edges 890 may be alternated on the teeth on the blade body.

An unmodified portion of the relief (clearance) side edge is from about .0002 to about .0007 inches. A modified portion 890 of the relief-side edge in accordance with symmetric embodiments discussed herein may result in a radius of from about .0010-.0100 inches, e.g., approximately .0040 inches. In other embodiments, a radius over .0010 inches may be used. The modified portion 890 of the relief-side edge C in accordance with asymmetric embodiments discussed herein may result in a first radius R1 from about .0010 inches to about .0022 inches and a second radius R2 from about .0035 inches to about .0092 inches, e.g., a first radius R1 of approximately .0016 inches and a second radius R2 of approximately .0062 inches.

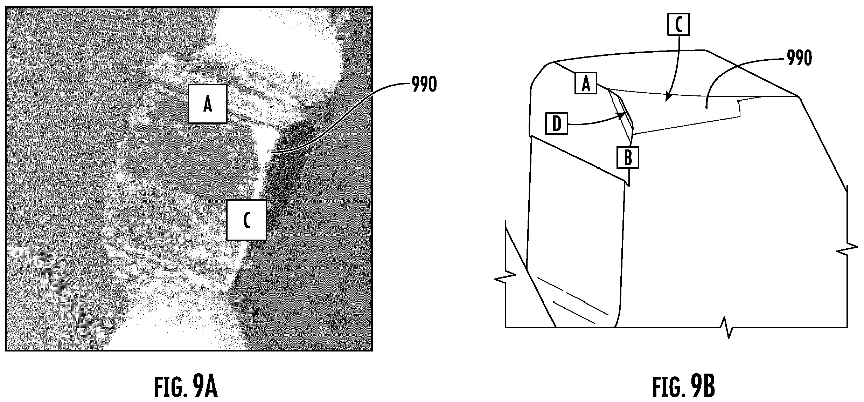

Referring now to Figs. 9A and 9B, further embodiments of the present inventive concept having a modified portion 990 at a corner junction will be discussed. As illustrated, a corner D at the junction of the tooth cutting edge A, the rake-side edge B and the relief-side edge C may have a modified portion 890 that is rounded in addition to a modified portion (e.g., a tapered portion) 790 of the relief-side edge C as discussed above with respect to Figs. 7A and 7B. The modified portion 990 may be accomplished by grinding, honing, casting, molding, or other known manufacturing process as shown in some embodiments. As illustrated, the radius is larger at the corner junction D and smaller extending away from the rake surface. Although the radius is shown as getting smaller, it will be understood that the radius size could remain the same throughout.

Furthermore, the shape and configuration of the modified portion 990 shown in Figs. 9A and 9B are provided as an example and, therefore, the shape of the edge could be different without departing from the scope of the present inventive concept. Embodiments of the present inventive concept illustrated in Figs. 9A and 9B provide a stronger tooth cutting edge A as well as a tougher relief-side edge C.

Although the modified portions 990 in Figs. 9A and 9B are shown on both edges/corners, embodiments of the present inventive concept are not limited thereto. For example, the modified portions 890 of the relief-side edges C can be tapered as shown or rounded as shown in Figs. 8A and 8B.

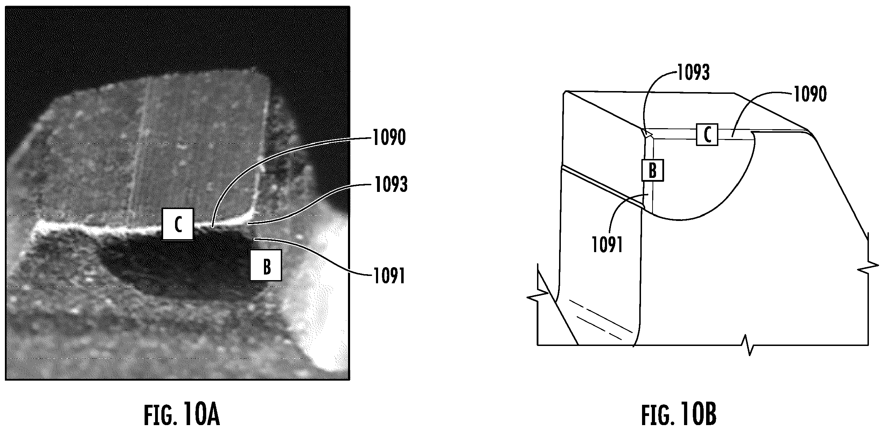

Referring now to Figs. 10A and 10B, further embodiments having first modified portions 1090 of the relief-side edges C, second modified portions 1091 of rake-side edges B and third modified portions 1093 of the corners will be discussed. As illustrated in Figs. 10A and 10B, the first modified portions 1090 of the relief-side edges C and the second modified portions 1091 of the rake-side edges B are radiused or rounded as well as the corner at the junction thereof. This can be accomplished by, for example, grinding, honing, casting, molding, or other known manufacturing processes. However, the teeth also may be cast as shown.

The rake-side edge B is generally not a primary cutting edge in the function on the saw and typically is only functional in the cutting action when the tooth is set, discussed above. In these embodiments, rake-side edges B would be expected to be sharp. However, on a reciprocating blade leaving that rake-side edge sharp may result in premature failure of the tooth by, for example, fracturing. To address this issue, the rake-side edge B is modified in such a manner that improves its resistance to fracturing as shown in Figs. 10A and 10B.

Although embodiments illustrated in Figs. 10A and 10B show the modified portions 1090, 1091 on both sides of the tooth, embodiments are not limited thereto. Only a single side may be modified, or the modified side may alternate down the length of the blade.

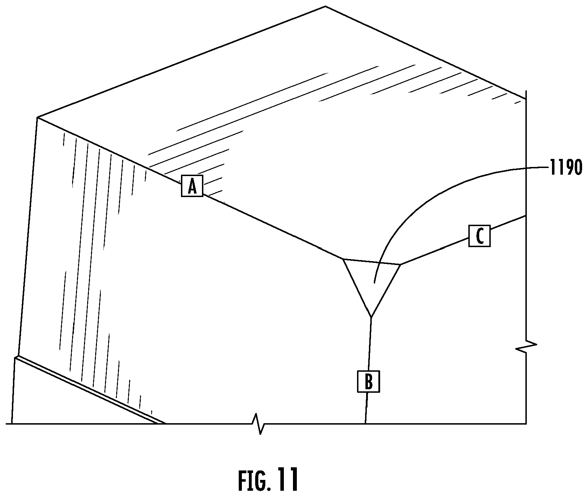

Referring now to Fig. 11, some embodiments where a first modified portion 1190 at a corner at the junction of the tooth cutting edge A, the rake-side edge B and the relief-side edge C, e.g., is broken or rounded will be discussed. As illustrated in Fig. 11, the first modified portion 1190 at the corner at the junction of the edges A, B, C is broken. The first modified portion 1190 may also be rounded in some embodiments. In other words, the corners of the tooth cutting edges A are modified to be a "non-sharp" corner. Making this corner of the tooth non-sharp allows the corner to stay intact during the reciprocating (back and forth) motion of the tooth when it impacts the materials. The corner is commonly expected to be sharp as it is assumed that the sharper the corner tooth, the more efficient the tooth is while cutting.

As with all embodiments, the modified portion 1190 illustrated in Fig. 11 is not limited to being on both sides of the tooth; only one corner may be modified without departing from the scope of the present inventive concept.

In one example, a corner radius may be from about .0006 to about .0010 inches. In some embodiments of the present inventive concept having symmetric modified corners, the radius may from about .0011 to about .0089 inches, e.g., approximately, .0064 inches. In other embodiments, any radius greater than .0011 inches may be acceptable. For asymmetric embodiments, a first radius R1 may have a range of from about .0011 to about .0038 inches, e.g., approximately.0015 inches. The second radius R2 may have a range of from about .0060 to about .0201 inches, e.g., approximately.0109 inches. However, embodiments of the present inventive concept are not limited thereto.

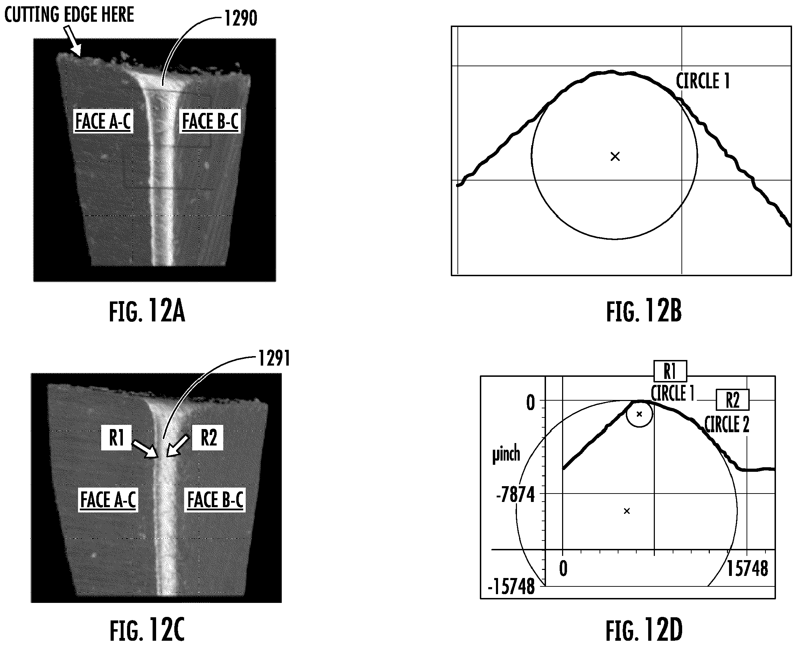

Referring now to Figs. 12A through 12D, modified edges having a variable number of radii in accordance with some embodiments of the present inventive concept will be discussed. It will be understood that although embodiments illustrated in Figs. 12A through 12D discussed herein are illustrated and discussed with respect to the non-cutting edge (B or C), embodiments of the present inventive concept are not limited to this configuration. For example, the variable radii may be used on any edge without departing from the scope of the present inventive concept. Similarly, although asymmetric embodiments illustrated in Figs. 12C and 12D only include two radii, more than two radii may be present without departing from the scope of the present inventive concept.

In particular, as illustrated in Figs. 12A and 12B, a non-cutting edge of the tooth includes a modified portion 1290 including a single symmetric radius. A graph illustrating a single constant radius is illustrated in Fig. 12B. In contrast, as illustrated in Figs. 12C and 12D, a non-cutting edge of the tooth includes a modified portion 1291 including an asymmetric radius after tooth modification, e.g., radii R1 and R2. Thus, the non-cutting edge has two radii corresponding to the radii of circles 1 and 2 of Fig. 12D. In this example, the radius of circle 2 is greater than the radius of circle 1, however, embodiments of the present inventive concept are not limited thereto. This variable radius embodiment may be combined with any of the various edge modifications discussed above without departing from the scope of the present inventive concept.

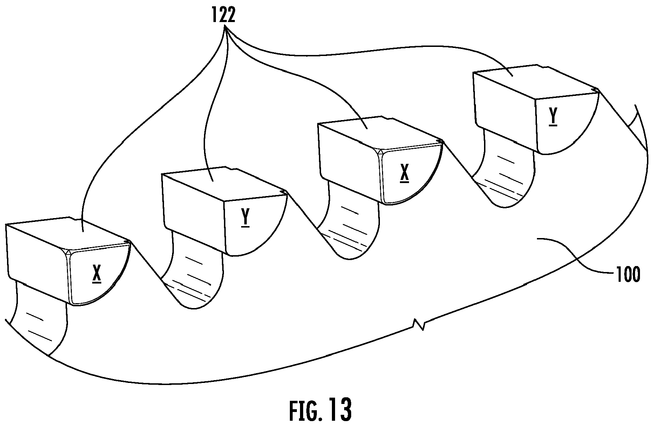

Referring now to Fig. 13, in alternative embodiments to the ones described in Figs. 7A-12D, not all of the teeth include a modified portion. For example, as illustrated in Fig. 13, only the teeth labeled "X" have a modified portion and the teeth labeled "Y" remain unmodified, i.e., so that every other tooth has a modified portion. This pattern may be used with any of the modified tooth embodiments discussed with respect to Figs. 7A-12D. It will be understood that the pattern provided in Fig. 13 is provided for example only and that other patterns of modified and unmodified teeth may be provided without departing from the scope of the present inventive concept. For example, every third tooth on the saw blade may be left unmodified. Furthermore, some or all of the cutting teeth may be set toward the left or right such that each tooth is slightly offset from the teeth positioned before or after it. For example, the teeth may be set in a pattern such as unset, left-set, right-set, etc. Thus, the teeth may not be positioned in a straight line from the rear end portion to the front end portion. Setting the teeth may provide improved cuts and efficiency.

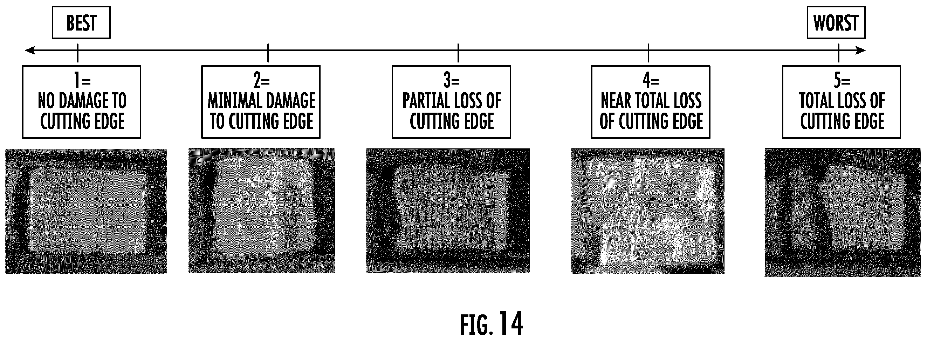

All of the modifications to non-cutting tooth edges in accordance with some embodiments of the present inventive concept have resulted in increasing the life of a reciprocating saw blade. This is illustrated by a scoring system developed to test the efficacy of teeth having modified portions discussed herein and the results of the tests using the scoring system. As illustrated in Fig. 14, the damage to the teeth under tests were scored from 1 to 5. A score of 1 indicating no damage to the tooth cutting edge; a score of 2 indicating minimal damage to the tooth cutting edge; a score of 3 indicating a partial loss of the tooth cutting edge; a score of 4 indicating a near total loss of the tooth cutting edge; and a score of 5 being a total loss of the tooth cutting edge.

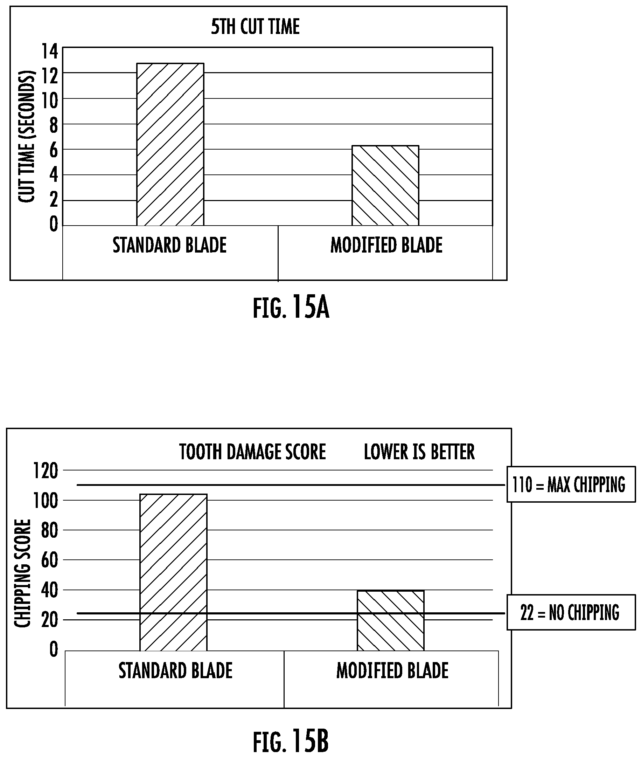

Referring to Figs. 15A and 15B, testing was conducted to compare reciprocating saw blades modified in accordance with the present disclosure and unmodified saw blades, when cutting 1-1/2" SCH40 low carbon steel black pipe. As illustrated in the tables of Figs. 15A and 15B, using modified non-cutting side edges as discussed above with respect to Figs. 8A through 12, the saw blade carbide teeth had approximately 79 percent less damage after 5 cuts of a steel pipe. In addition, and unexpectedly the saw blade had approximately two times the cutting speed as compared to a control saw blade without the modified side edges in accordance with embodiments discussed herein. Reciprocating saw blades used in these tests had a 20 degree clearance angle for greater cutting efficiency.

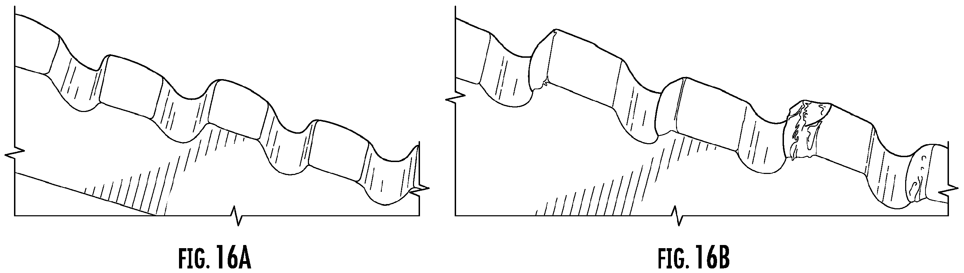

As further illustrated in Fig. 16A, using a modified saw blade in accordance with embodiments discussed herein, after 5 cuts in steel with a blade having a low clearance angle (less than 12 degrees), the test resulted in no chipped teeth. Similarly, Fig. 16B illustrates a reciprocating saw blade modified in accordance with embodiments of the present inventive concept and having a higher clearance angle, equal or greater than 12 degrees, that after 5 cuts in steel, only one chipped tooth and a few very small broken corners resulted.

As discussed above, it is common knowledge in the saw blade industry that higher clearance angles are more efficient at removing material during a cut, but carbide-tipped reciprocating blades do not currently use these higher clearance angles because they result in premature chipping in tough applications such as metal cutting. Embodiments discussed herein having modified non-cutting tooth edges allow for improved performance and preservation of the tooth during tough cutting applications even when higher clearance angles are used. Furthermore, testing has shown that the radius of the non-cutting tooth edges B and C should be greater than 0.0005. If the tooth cutting edge A is also modified in additions to B and C, further benefits in performance can be seen.

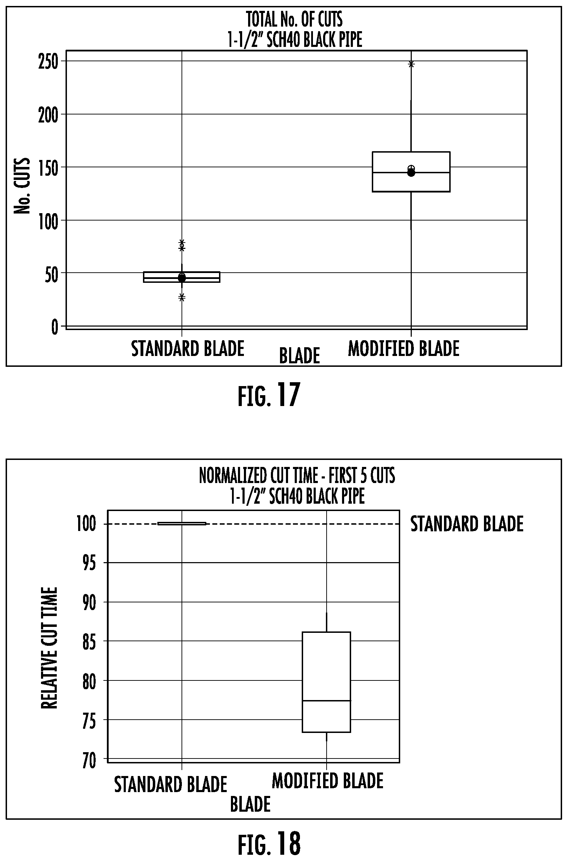

Referring to Figs. 17 and 18, in further testing, modified reciprocating saw blades in accordance with the present disclosure were compared to unmodified reciprocating saw blades when cutting 1-1/2" SCH40 low carbon steel black pipe. Referring first to the graph of Fig. 17, test results illustrating the life of the blade will be discussed. As illustrated in Fig. 17, in automated rig testing, blades with the tooth edge modifications in accordance with embodiments discussed herein made more than three times as many cuts before failure than standard blades in 1-1/2" SCH40 low carbon steel black pipe. These results represent a combination of test results from eight different test set ups.

Referring now to the graph of Fig. 18, cutting speed performance of modified blades in accordance with embodiments of the present inventive concept will be discussed. As illustrated in Fig. 18, in automated rig testing, blades with the tooth edge modification in accordance with embodiments discussed herein cut twenty-one percent faster on average through the first 5 cuts of each blade. These results represent a combination of test results from eight different test set ups.

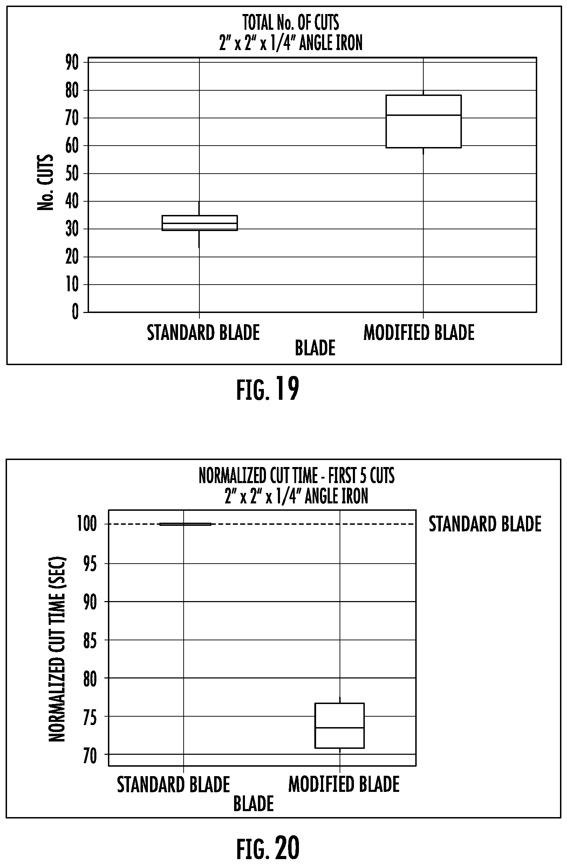

Referring to Figs. 19 and 20, in further testing, modified reciprocating saw blades in accordance with the present disclosure were compared to unmodified reciprocating saw blades when cutting 2" × 2" × ¼" angle iron. Referring now to the graph of Fig. 19, a comparison of modified blades and standard blades will be discussed. As illustrated, in automated rig testing, blades with the tooth edge modification in accordance with embodiments discussed herein made more than two times as many cuts before failure than standard blades in 2" × 2" × ¼" Angle Iron.

Referring now to Fig. 20, a comparison of standard blades versus the modified blades will be discussed. As illustrated in Fig. 20, in automated rig testing, blades with the tooth edge modification cut twenty six percent faster on average through the first 5 cuts of each blade.

As discussed briefly above, embodiments of the present inventive concept provide a hard metal reciprocating saw blade sawtooth that does not suffer from premature failure by chipping, particularly when cutting typical non-heat-treated low to medium carbon steel workpieces. Some or all of the non-cutting tooth edges of the teeth are modified, which reduces the likelihood and possibly prevents the saw teeth from premature failure. Thus, embodiments of the present inventive concept allow provision of reciprocating saw blades that more effectively cut hard material and last significantly longer than standard blades.

Example embodiments have been provided so that this disclosure will be thorough, and to fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

In the specification, there have been disclosed embodiments of the inventive concept and, although specific terms are used, they are used in a generic and descriptive sense only and not for purposes of limitation.

## Claims

1. A reciprocating saw blade comprising:
an elongated blade body extending along a blade axis and having a rear end portion, a front end portion, a first lateral face, a second lateral face opposite the first lateral face, and a blade cutting edge extending between the rear end portion and the front end portion, the blade cutting edge including a plurality of teeth and a plurality of gullets; and
a tang coupled to the rear end portion and configured to be received in a blade holder of a powered reciprocating saw,
wherein at least a portion of the plurality of teeth each includes a rake face, a relief face, a tooth cutting edge at a junction between the rake face and the relief face, at least one non-cutting edge extending on a first side face transverse to the rake face and the relief face, a second side face opposite the first side face and transverse to the rake face and the relief face, a first relief-side edge at a junction between the first side face and the relief face, a second relief-side edge at a junction between the second side face and the relief face, a first modified portion on at least one of the first and second relief-side edges, the first modified portion being at least one of rounded or tapered and extending rearward from the rake face.

2. The reciprocating saw blade of Claim 1, wherein the first modified portion is tapered and is wider adjacent the tooth cutting edge and tapers inward to be narrower as the modified portion extends rearward from the rake face and the cutting edge.

3. The reciprocating saw blade of Claim 1, wherein the first modified portion is rounded and extends from about 10 to about 25 percent of the at least one of the first and second relief-side edges wherein the first modified portion extends rearward from the rake face and the cutting edge.

4. The reciprocating saw blade of Claim 1, wherein the first modified portion of the at least one of the first and second relief-side edges comprises two or more radii.

5. The reciprocating saw of Claim 1 or 3, 4, wherein the first modified portion of the at least one of the first and second relief-side edges is convex.

6. The reciprocating saw blade of any preceding claim, wherein at least one corner of the cutting edge at an intersection of the cutting edge and the first or second relief-side edge includes a second modified portion that is at least one or tapered or rounded or tapered.

7. The reciprocating saw blade of any of claims 1 to 5, further comprising a second modified portion of a first rake-side edge at a junction between the first side face and the rake face, and a third modified portion of a second rake-side edge at a junction between the second side face and the rake face, wherein at least one of the second and third modified portions is at least one of tapered or rounded.

8. The reciprocating saw blade of Claim 7, wherein at least one of the second modified portion and the third modified portion is rounded and includes two or more radii.

9. The reciprocating saw blade of Claim 7 or 8, further comprising a fourth modified portion on at least one corner of the cutting edge at an intersection of the first rake-side edge and the first relief side-edge or an intersection of the second-rake-side edge and second relief side-edge, the fourth modified portion being at least one of tapered or rounded.

10. The reciprocating saw blade of any preceding Claim, wherein each of the plurality of cutting teeth comprise a hard metal insert received by a tooth holder coupled to the elongated body of the reciprocating saw blade.

11. The reciprocating saw blade of Claim 10, wherein the hard metal insert comprises one of carbide and cement.

12. A method of fabricating a saw tooth for a reciprocating saw blade, the method comprising:
providing the saw tooth having a rake face, a relief face, a tooth cutting edge at a junction between the rake face and the relief face, at least one non-cutting edge extending on a first side face transverse to the rake face and the relief face, and a second side face opposite the first side face and transverse to the rake face and the relief face, a first relief-side edge at a junction between the first side face and the relief face, and a second relief-side edge at a junction between the second side face and the relief face; and
removing a portion of at least one of the first and second relief-side edges to provide a first modified portion extending rearward from the rake face.

13. The method of Claim 12, wherein removing a portion of at least one of the first and second relief-side edges to provide the first modified portion comprises removing a portions of the first and second relief-side edges such that the first modified portion is tapered and is largest adjacent the tooth cutting edge and tapers as the tapered portion extends rearward from the rake face and the cutting edge.

14. The method of Claim 12, wherein removing a portion of at least one of the first and second relief-side edges the first modified portion comprises providing the first modified portion that is rounded and the rounded first modified portion is from about 10 to about 25 percent of the at least one of the first and second relief-side edges and that extends rearward from the rake face and the cutting edge.

15. The method of Claim 12 or 14, wherein the first modified portion of the at least one of the first and second relief-side edges comprises two or more radii.
